# FASCICULE DE BREVET EUROPEEN

(11) **EP 4 530 503 B1**
(45) Date de publication et mention de la délivrance du brevet: **26.08.2026**
(21) Numéro de dépôt: 24198229.7
(22) Date de dépôt: 03.09.2024
(51) Int. Cl.: F16J 13/14, B62D 25/24, B64C 3/18, F16L 55/132, B64C 7/00, B64C 3/34, B64C 1/26

(54) **BOUCHON D'ÉTANCHÉITÉ DÉFORMABLE ET PROCÉDÉ POUR BOUCHER UNE CAVITÉ À L'AIDE D'UN TEL BOUCHON D'ÉTANCHÉITÉ**
VERFORMBARER DICHTUNGSSTOPFEN UND VERFAHREN ZUM VERSCHLIESSEN EINES HOHLRAUMES MIT HILFE EINES SOLCHEN DICHTUNGSSTOPFENS
DEFORMABLE SEALING PLUG AND METHOD OF SEALING A CAVITY WITH SUCH A SEALING PLUG

(30) Priorité: 27.09.2023 FR 2310273
(43) Date de publication de la demande: 02.04.2025
(73) Titulaire: Airbus Operations SAS, 31060 Toulouse (FR)
(72) Inventeur: GOUPIL, Frédéric, 31060 TOULOUSE (FR); VIAUVY, Ghislain, 31060 TOULOUSE (FR); FAUCHILLE, Vincent, 31300 TOULOUSE (FR); LE, Caroline, 31060 TOULOUSE (FR); BIGNEBAT, François, 31300 TOULOUSE (FR); GARRES, Nicolas, 31300 TOULOUSE (FR); GELLE, Adrien, 31300 TOULOUSE (FR); MERCIER, Antoine, 31300 TOULOUSE (FR)
(74) Mandataire: Gevers & Orès

(56) Documents cités:
- US-A- 2 843 154
- US-A- 3 240 379
- US-A- 5 119 861
- US-A1- 2002 088 768
- US-B1- 6 182 755
- US-B2- 8 439 220

## Description

### Domaine technique

La présente invention concerne un bouchon d'étanchéité déformable et un procédé pour boucher une cavité en utilisant un tel bouchon d'étanchéité, en particulier une cavité d'une structure primaire d'un aéronef comme un caisson de voilure.

### Etat de la technique

Dans de nombreux domaines techniques, la fabrication de structures implique l'assemblage de plusieurs pièces entre lesquelles des espaces ou des cavités peuvent exister. Ces cavités peuvent être problématiques et devoir être bouchées, en particulier dans le cadre d'applications requérant des structures étanches.

Par exemple, dans le domaine de l'aéronautique, les ailes d'un aéronef comportent une structure primaire, appelée caisson de voilure, comprenant des assemblages complexes de plusieurs plaques métalliques. En particulier à la base des ailes, à savoir au niveau de la liaison entre le caisson de voilure et le caisson central de l'aéronef, le chevauchement de certaines plaques crée des cavités en forme de cheminée relativement larges avec des sections irrégulières. Ces cavités doivent impérativement être bouchées de façon étanche dans la mesure où elles font communiquer l'intérieur et l'extérieur du caisson de voilure et que ce dernier est utilisé comme réservoir de carburant.

Une méthode connue pour boucher ce type de cavité consiste à y injecter un mastic d'étanchéité contenant des particules de mousses. Toutefois, cette méthode n'est pas complètement satisfaisante en termes d'ergonomie et de mise en œuvre. En effet, cette méthode peut nécessiter un accès de part et d'autre de la cavité, ce qui est problématique dans les espaces restreints, ainsi qu'une pression d'injection importante, et donc un outillage encombrant, lorsque la cavité à boucher est très large ou très profonde.

De plus, dans le cadre de l'application particulière au caisson de voilure, l'injection du mastic d'étanchéité doit être réalisée depuis l'intérieur dudit caisson de voilure afin de garantir le respect de certaines exigences. L'espace interne du caisson de voilure est exigu et difficile d'accès ce qui rend l'opération longue et fastidieuse, notamment à cause des étapes de préparation (à savoir boucher tous les espaces annexes pour s'assurer que le mastic d'étanchéité pénètre correctement dans la cavité).

La taille (en hauteur) des ailes étant un facteur directement lié aux performances des aéronefs, celle-ci est destinée à être réduite à l'avenir, conduisant à des caissons de voilure encore plus étroits. Il est donc important de trouver de nouvelles solutions pour faciliter les opérations visant à boucher les cavités précitées.

### Exposé de l'invention

La présente invention a pour objet de remédier aux inconvénients précités. Elle concerne un bouchon d'étanchéité destiné à être agencé à l'intérieur d'une cavité pour boucher ladite cavité de manière étanche.

Selon l'invention, ledit bouchon d'étanchéité comporte au moins :
- une enveloppe configurée pour pouvoir être déformée de manière incompressible, l'enveloppe délimitant un espace interne creux et étant pourvue d'au moins un orifice apte à faire communiquer ledit espace interne avec l'extérieur de l'enveloppe ;
- une tige agencée de manière coulissante au travers de l'enveloppe en s'étendant de part et d'autre de ladite enveloppe, la tige comprenant une première extrémité pourvue d'une tête apte à exercer un effort de compression sur l'enveloppe pour la déformer lorsqu'une seconde extrémité de la tige est déplacée de manière à tirer la tête contre l'enveloppe ; et
- un joint visqueux agencé dans l'espace interne de l'enveloppe, le bouchon d'étanchéité étant configuré de sorte que le joint visqueux soit chassé, au moins en partie, à l'extérieur de l'enveloppe au travers du ou des orifices lorsque l'enveloppe est déformée par la tête de la tige.

Ainsi, grâce à l'invention, on dispose d'un bouchon d'étanchéité capable de boucher facilement et rapidement des cavités de formes et/ou de tailles variées de manière étanche, le bouchon d'étanchéité pouvant être positionné très simplement dans la cavité à boucher et l'étanchéité pouvant être obtenue par simple tirage sur la tige qui déforme l'enveloppe et chasse le joint visqueux, l'enveloppe ainsi déformée et le joint visqueux ainsi chassé comblant la cavité de manière à la boucher hermétiquement.

Avantageusement, la tête de la tige présente une forme trapézoïdale, la tête étant agencée de sorte que la petite base de la forme trapézoïdale vienne en appui contre l'enveloppe lorsque la seconde extrémité de la tige est déplacée de manière à tirer la tête contre ladite enveloppe.

En outre, de façon avantageuse, l'enveloppe est pourvue d'une ouverture permettant d'accéder à l'espace interne et le bouchon d'étanchéité comporte un couvercle rigide configuré pour fermer ladite ouverture.

Dans un mode de réalisation particulier, le bouchon d'étanchéité comporte une pièce anti-retour agencée sur la tige, dans l'espace interne de l'enveloppe en s'étendant transversalement par rapport à la tige, la pièce anti-retour étant configurée pour guider le joint visqueux vers le ou les orifices de l'enveloppe lorsque ladite enveloppe est déformée, et pour empêcher le joint visqueux de refouler vers l'intérieur de l'espace interne.

De préférence, le joint visqueux correspond à un mastic d'étanchéité polymérisable à température ambiante.

Dans un mode de réalisation particulier, l'enveloppe présente une forme parallélépipédique allongée comprenant une paroi latérale dans laquelle sont pratiqués le ou les orifices, et comprenant une paroi à chacune de ses extrémités longitudinales entre lesquelles s'étend la tige de manière traversante, la tête de la tige étant apte à venir en appui contre l'une desdites parois pour déformer l'enveloppe.

La présente invention concerne également une structure pourvue d'au moins une cavité. Selon l'invention, la structure comporte au moins un bouchon d'étanchéité tel que décrit ci-dessus, le bouchon d'étanchéité étant agencé dans la cavité de manière à boucher ladite cavité de façon étanche.

La présente invention concerne également un procédé pour boucher une cavité à l'aide d'un bouchon d'étanchéité tel que décrit ci-dessus.

Selon l'invention, ledit procédé comporte au moins les étapes suivantes mises en œuvre de façon successive :
- une étape de positionnement pour insérer le bouchon d'étanchéité dans la cavité à boucher de sorte que la seconde extrémité de la tige soit accessible depuis l'extérieur de la cavité ;
- une étape de déformation pour déplacer la seconde extrémité de la tige de manière à tirer la tête contre l'enveloppe et exercer un effort de compression pour déformer ladite enveloppe jusqu'à ce que l'enveloppe bouche, au moins en partie, la cavité et qu'au moins une partie du joint visqueux soit chassé à l'extérieur de l'enveloppe au travers du ou des orifices ; et
- une étape de polymérisation pour laisser le joint visqueux, chassé à l'extérieur de l'enveloppe à l'étape de déformation, polymériser de manière à obtenir l'étanchéité complète de la cavité.

En outre, de façon avantageuse, le procédé comporte une étape préliminaire, mise en œuvre avant l'étape de positionnement, pour injecter le joint visqueux dans l'espace interne de l'enveloppe.

Dans un mode de réalisation particulier, à l'étape de déformation, la seconde extrémité de la tige est déplacée en étant tirée à l'aide d'un outil de tirage apte à fournir un effort de tirage prédéterminé.

De plus, avantageusement, le procédé comporte une étape intermédiaire, mise en œuvre après l'étape de positionnement et avant l'étape de déformation, pour mettre en place dans la cavité au moins une pièce intermédiaire de sorte qu'une première extrémité de la pièce intermédiaire soit mise en appui contre le bouchon d'étanchéité à l'intérieur de la cavité et qu'une seconde extrémité de la pièce intermédiaire fasse saillie à l'extérieur de ladite cavité, le tirage de la seconde extrémité de la tige étant réalisé en prenant appui contre la seconde extrémité de la pièce intermédiaire.

US 2002/088768 A1 divulgue un dispositif de fermeture hermétique pour un goulot de bouteille.

US 6 182 755 B1 divulgue un dispositif de fermeture hermétique d'un puits de forage selon le préambule de la revendication 1.

### Brève description des figures

Les figures annexées feront bien comprendre comment l'invention peut être réalisée. Sur ces figures, des références identiques désignent des éléments semblables.
La figure 1 est une vue en coupe d'un mode de réalisation préféré d'un bouchon d'étanchéité.
La figure 2A est une vue en coupe du bouchon d'étanchéité de la figure 1 lors d'une étape de préparation pour injecter un joint visqueux dans ledit bouchon d'étanchéité.
La figure 2B est une vue en coupe du bouchon d'étanchéité de la figure 2A une fois l'étape de préparation terminée.
La figure 2C est une vue en coupe du bouchon d'étanchéité de la figure 2B qui est positionné dans une cavité.
La figure 2D est une vue en coupe du bouchon d'étanchéité de la figure 2C qui est déformé de manière à boucher la cavité.
La figure 3 est une vue éclatée partielle d'un aéronef montrant l'assemblage d'un caisson de voilure sur un caisson central.
La figure 4 est une vue agrandie en perspective d'une zone de jonction entre le caisson de voilure et le caisson central de la figure 3 comprenant une cavité à boucher.
La figure 5 est une vue en perspective d'un bouchon d'étanchéité positionné dans la cavité à boucher de la figure 4.
La figure 6 est une vue en perspective du bouchon d'étanchéité de la figure 5 sur lequel est agencé une pièce intermédiaire pour une étape de déformation dudit bouchon d'étanchéité.
La figure 7 est un schéma synoptique d'un procédé pour boucher une cavité en utilisant le bouchon d'étanchéité.

### Description détaillée

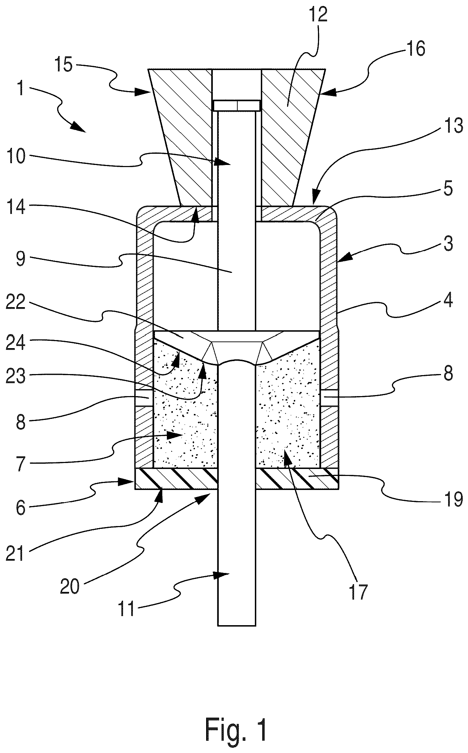

Le bouchon d'étanchéité 1 (ci-après bouchon 1) permettant d'illustrer l'invention est représenté schématiquement sur la figure 1 dans un mode de réalisation préféré. Il s'agit d'un bouchon déformable destiné à être positionné dans une cavité et à y être déformé de manière à en épouser les formes pour la boucher hermétiquement. Les caractéristiques du bouchon 1, décrites ci-après dans la description, lui permettent de rester en place dans la cavité sous sa forme déformée et ainsi d'assurer une étanchéité.

De manière non limitative, la cavité 2 peut correspondre à un orifice ou un trou pratiqué dans une structure comprenant une ou plusieurs pièces. Par exemple, une telle structure peut correspondre à un assemblage de plusieurs sous-ensembles entre lesquels il existe un espacement formant la cavité 2.

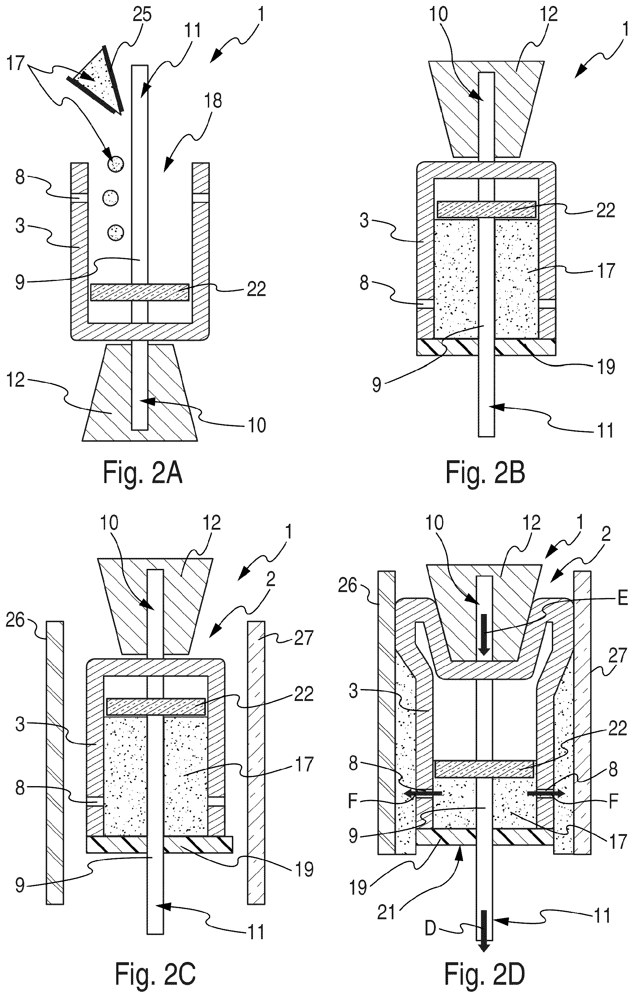

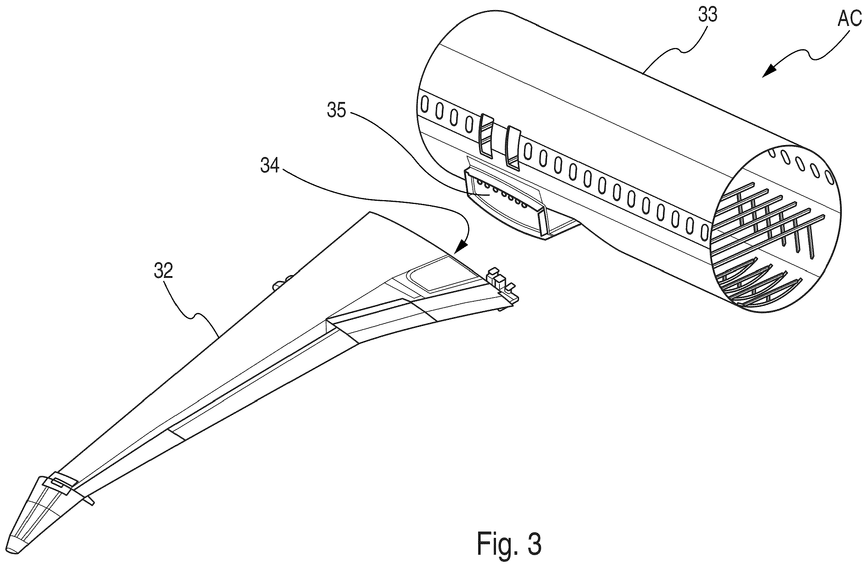

Un exemple de mise en œuvre du bouchon 1 pour boucher une cavité 2 est représenté schématiquement de la figure 2A à la figure 2D. Dans une application préférée non limitative, représentée de la figure 3 à la figure 6, la cavité 2 correspond à une cavité en forme de cheminée entre un caisson de voilure 34 et un caisson central 35 d'un aéronef AC. Toutefois, le bouchon 1 présente une grande souplesse d'utilisation qui lui permet de convenir à de nombreux domaines d'application et en particulier à des cavités de tailles et de formes variées.

Dans un mode de réalisation préféré, représenté sur la figure 1, le bouchon 1 comporte une enveloppe 3 présentant une forme sensiblement parallélépipèdique allongée. L'enveloppe 3 comprend une paroi latérale 4 et des parois 5 et 6 à ses extrémités longitudinales. L'enveloppe 3 correspond à un corps déformable dont les parois 4, 5 et 6 délimitent une enceinte fermée formant un espace interne 7 creux.

Par « corps déformable », on entend un corps présentant une rigidité suffisante pour garder une forme bien définie au repos tout en étant suffisamment élastique pour pouvoir être déformée sous l'action d'un effort extérieur. L'enveloppe 3 est, notamment, configurée pour pouvoir se déformer de manière à épouser la forme de la cavité 2 destinée à être bouchée par le bouchon 1. De plus, l'enveloppe 3 est configurée pour être déformée de manière incompressible. De préférence, l'enveloppe 3 correspond à un élastomère vulcanisé, dont les caractéristiques fonctionnelles (élasticité, résistance...) sont stables dans la gamme de températures auxquelles sont usuellement exposées les voilures d'aéronefs.

En outre, l'enveloppe 3 est pourvue d'orifices 8 pratiqués dans la paroi latérale 4. Les orifices 8 correspondent à des trous traversants de taille réduite qui sont aptes à faire communiquer l'espace interne 7 avec l'extérieur de l'enveloppe 3. Dans le mode de réalisation de la figure 1, l'enveloppe 3 est pourvue de deux orifices 8. Toutefois, dans d'autres modes de réalisation, elle peut comporter un seul orifice 8 ou plus de deux orifices 8.

Par ailleurs, le bouchon 1 comporte une tige 9 agencée de manière coulissante au travers de l'enveloppe 3. Plus précisément, la tige 9 est agencée selon la direction longitudinale de l'enveloppe 3 en s'étendant de part et d'autre de cette dernière à travers les parois 5 et 6. La tige 9 comprend une première extrémité 10 traversant la paroi 5 et une seconde extrémité 11 traversant la paroi 6. L'extrémité 10 de la tige 9 est pourvue d'une tête 12 apte à venir en appui contre une face 13 externe de la paroi 5. L'extrémité 11 de la tige 9 est destinée à être déplacée de manière à tirer la tête 12 contre la face 13 pour exercer un effort de compression sur la paroi 5 de l'enveloppe 3. Pour ce faire, le bouchon 1 est configuré de sorte qu'une fois qu'il est positionné dans la cavité 2, l'extrémité 11 de la tige 9 est accessible depuis l'extérieur de la cavité 2. De préférence, l'extrémité 11 de la tige 9 présente une longueur adaptée pour faire saillie à l'extérieur de la cavité 2.

Ainsi, en agissant sur la tige 9 (en la tirant) on est en mesure de comprimer l'enveloppe 3 de manière à la déformer pour boucher la cavité 2 comme expliqué dans un exemple de mise en œuvre ci-après. L'enveloppe 3 étant composée d'un matériau incompressible, elle se déforme jusqu'à occuper la majorité de l'espace latéral entre la tête 12 et les parois de la cavité 2. De plus, la tête 12 de la tige 9 présente une forme adaptée pour contribuer au maintien en place de l'enveloppe 3 dans la cavité 2, une fois déformée.

Dans le mode de réalisation de la figure 1, la tête 12 correspond à une pièce rapportée fixée solidairement à l'extrémité 10 de la tige 9. Dans ce mode de réalisation non limitatif, la tête 12 présente une section de forme trapézoïdale selon le plan de coupe de la figure 1. La tête 12 est agencée sur la tige 9 de sorte qu'une face 14, correspondant à la petite base de la forme trapézoïdale, soit en appui contre la face 13 de l'enveloppe 3 lorsque la tête 12 est tirée contre la paroi 5. La tête 12 ainsi agencée présente des faces 15 et 16 inclinées, correspondant aux côtés non parallèles de la forme trapézoïdale, qui sont orientées de manière à favoriser le maintien en place de l'enveloppe 3 dans la cavité 2, une fois déformée.

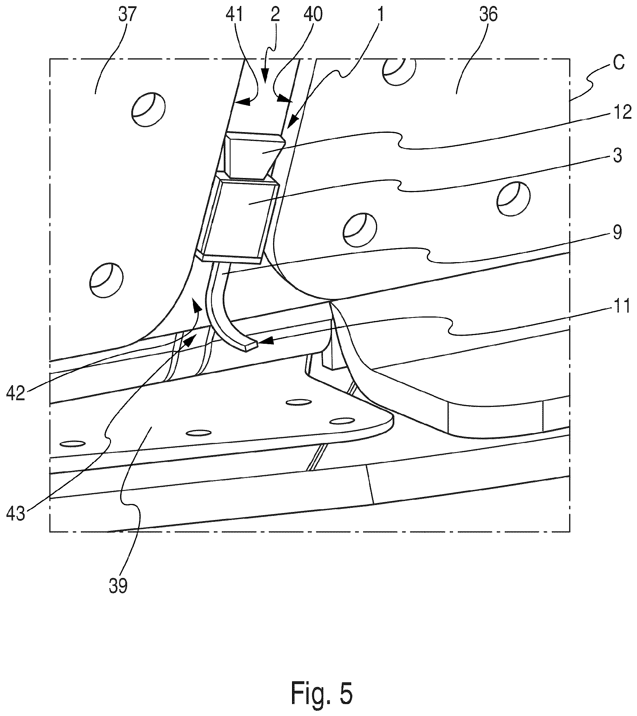

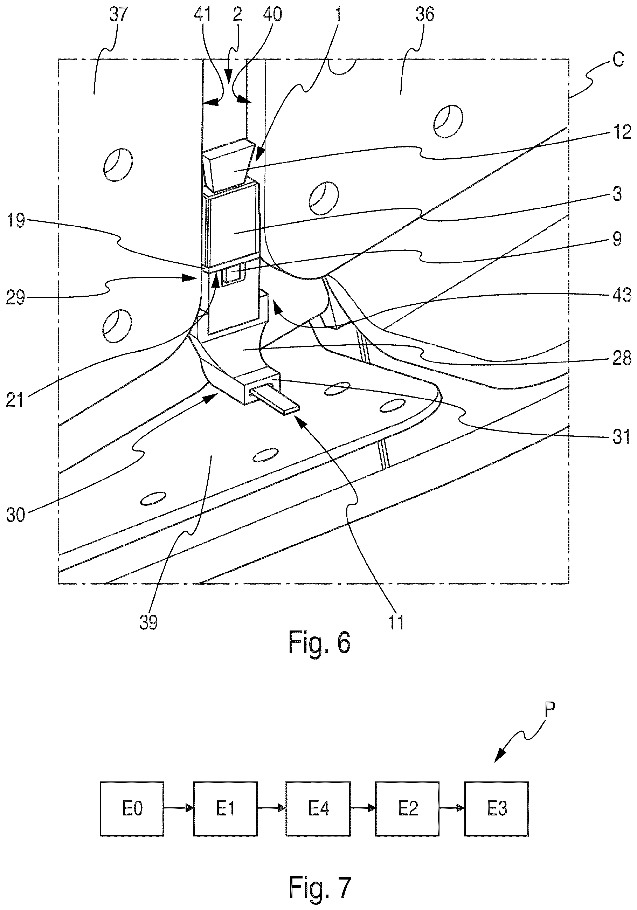

La tige 9 peut correspondre à tout type d'élément longiligne apte à être tiré de manière à plaquer et tirer la tête 12 contre l'enveloppe 3 pour la déformer. La tige 9 peut, notamment, comporter à son extrémité 11 une partie rugueuse (non représentée) pour faciliter le tirage. De préférence, la tige 9 correspond à une languette souple, à savoir une languette dont au moins l'extrémité 11 est flexible. Une telle languette souple permet de faciliter l'insertion du bouchon 1 dans la cavité 2 ainsi que le tirage de l'extrémité 11. En effet, grâce à l'élasticité de l'enveloppe 3 et à la souplesse de la tige 9, le bouchon 1 peut être plus facilement inséré dans des cavités difficiles d'accès (comme dans l'exemple représenté sur la figure 5 et la figure 6). De plus, l'extrémité 11 souple peut être courbée de manière à faire saillie hors de la cavité 2 avec un angle adapté pour le tirage de la tige 9 (comme représenté sur la figure 6).

Par ailleurs, le bouchon 1 comporte un joint visqueux 17 agencé dans l'espace interne 7 de l'enveloppe 3. Le joint visqueux 17 correspond à un produit à base d'au moins un polymère qui est apte à polymériser au contact de l'oxygène à température ambiante pour former un élément de type élastomérique permettant d'assurer une étanchéité. Par « visqueux », on entend que le joint visqueux 17, sous sa forme non polymérisée, présente une texture relativement fluide ou pâteuse de sorte qu'il est apte à être étalé ou répandu sans pour autant être liquide. Par exemple, le joint visqueux 17 peut correspondre à un mastic de bourrage de type « PR », usuel dans le domaine de l'aéronautique. De préférence, il présente une forte adhérence sur les métaux.

Le bouchon 1 est configuré de sorte que le joint visqueux 17 soit chassé, au moins en partie, à l'extérieur de l'enveloppe 3 au travers des orifices 8 lorsque l'enveloppe 3 est déformée par l'effort de compression obtenu par le tirage de la tige 9. Le joint visqueux 17 étant relativement fluide, il est apte à se répandre dans la cavité 2 au fur et à mesure qu'il est chassé et que l'enveloppe 3 est déformée par le tirage de la tige 9.

Ainsi, d'une part, l'enveloppe 3 épouse la forme de la cavité 2 en se déformant, et d'autre part, le joint visqueux 17 se répand au travers de la paroi latérale 4 (via les orifices 8) de l'enveloppe 3 de manière à remplir la cavité 2. Le joint visqueux 17 est, notamment, apte à remplir des interstices et de petites cavités pouvant se former entre les parois de la cavité 2 et l'enveloppe 3 au cours de la déformation de ladite enveloppe 3. De cette manière, l'enveloppe 3 et le joint visqueux 17 comblent entièrement la cavité 2 pour la boucher de manière complètement étanche.

En outre, le joint visqueux 17, en se polymérisant dans la cavité 2, permet de consolider le bouchon 1 en contribuant au maintien en place de l'enveloppe 3 sous sa forme déformée.

Ainsi, grâce au bouchon 1, on est capable de boucher facilement et rapidement des cavités de formes et de tailles variées de manière étanche. D'une part, le bouchon 1 peut être positionné très simplement dans la cavité 2 à boucher. D'autre part, l'étanchéité peut être obtenue par simple tirage sur la tige 9, depuis l'extérieur de la cavité 2, permettant de déformer l'enveloppe 3 et de chasser le joint visqueux 17 hors de l'enveloppe 3. L'enveloppe 3 ainsi déformée et le joint visqueux 17 ainsi chassé comblent entièrement et hermétiquement la cavité 2.

De plus, dans un mode de réalisation particulier, l'enveloppe 3 est pourvue d'une ouverture 18 permettant d'accéder à l'espace interne 7. Dans le mode de réalisation de la figure 1, l'ouverture 18 est agencée à une extrémité longitudinale de l'enveloppe 3, au niveau de la paroi 6, en s'étendant sur toute la surface de ladite paroi 6. En outre, le bouchon 1 comporte un couvercle rigide 19 agencé sur l'extrémité longitudinale de l'enveloppe 3 comprenant l'ouverture 18 de manière à fermer ladite ouverture 18. Le couvercle rigide 19 peut être fixé de façon amovible ou solidaire à l'enveloppe 3, par exemple en étant collé. L'enveloppe 3 et le couvercle rigide 19 peuvent comporter des formes coopérantes permettant de les assembler.

Par ailleurs, le couvercle rigide 19 comporte un trou 20 pour le passage de l'extrémité 11 de la tige 9. Il comporte également une surface externe 21 orientée vers l'extérieur de l'enveloppe 3 et qui est apte à servir de surface d'appui (directe ou indirecte) pour le tirage de la tige 9.

Ainsi, l'ouverture 18 permet d'injecter facilement le joint visqueux 17 dans l'espace interne 7, après quoi le couvercle rigide 19 peut être installé sur l'enveloppe 3 pour la fermer et retenir le joint visqueux dans l'espace interne 7.

Dans un mode de réalisation particulier, représenté sur la figure 1, le bouchon 1 comporte une pièce anti-retour 22 agencée sur la tige 9 dans l'espace interne 7 de l'enveloppe 3. Cette pièce anti-retour 22 est configurée pour guider le joint visqueux 17 vers l'extérieur de l'enveloppe 3 lorsque celle-ci est déformée. Elle permet également d'empêcher le joint visqueux 17 de refouler vers l'intérieur de l'espace interne 7.

La pièce anti-retour 22 correspond à une pièce d'épaisseur réduite telle qu'une lame ou une rondelle. Elle est agencée de manière à s'étendre radialement par rapport à la tige 9, de préférence sensiblement perpendiculairement à ladite tige 9. Comme représenté sur la figure 1, la pièce anti-retour 22 peut être agencée de manière à laisser une espace libre entre elle et la paroi 5 de l'enveloppe 3.

Le joint visqueux 17 est agencé dans une partie de l'espace interne 7 comprise entre une face 23 de la pièce anti-retour 22 orientée vers la paroi 6 et ladite paroi 6 de l'enveloppe 3. La face 23 comprend des pentes 24, à ses extrémités radialement externes, présentant une forme adaptée pour guider le joint visqueux 17 vers les orifices 8 lorsque l'enveloppe 3 est déformée.

En outre, la pièce anti-retour 22 est configurée de sorte que la face 23 couvre sensiblement toute la section radiale de l'espace interne 7. Ainsi, elle empêche le joint visqueux 17 de refouler vers l'intérieur de l'espace interne 7 (à savoir entre la pièce anti-retour 22 et la paroi 5) lorsque l'enveloppe 3 est déformée. Ceci évite qu'une partie du joint visqueux 17 reste coincée dans un éventuel bourrelet formé par l'enveloppe 3 déformée.

Dans le cadre de la présente invention, le bouchon 1 tel que décrit ci-dessus peut être utilisé pour boucher la cavité 2 selon un procédé P, représenté schématiquement sur la figure 7 et dont les étapes sont illustrées de la figure 2A à la figure 2D. Pour ce faire, le procédé P comporte au moins des étapes E0, E1, E2 et E3, décrites ci-dessous, et mises en œuvre de manière successive.

L'étape E0 est une étape préliminaire pour assembler le bouchon 1 avant son insertion dans la cavité 2. Le joint visqueux 17 est tout d'abord préparé avant d'être injecté dans l'espace interne 7 de l'enveloppe 3 par l'ouverture 18. Comme représenté sur la figure 2A, la pièce anti-retour 22 est positionnée dans l'espace interne 7 puis le joint visqueux 17 est injecté par-dessus ladite pièce anti-retour 22 en utilisant un outil 25 comme une seringue ou un pistolet à injection.

Une fois que le joint visqueux 17 est injecté, l'ouverture 18 est fermée par le couvercle rigide 19, comme représenté sur la figure 2B. La fixation du couvercle rigide 19 sur l'enveloppe 3 est réalisée de façon suffisamment solide et étanche pour résister à l'effort de compression de la tige 9 visant à déformer l'enveloppe 3 et pour que le joint visqueux 17 ne ressorte pas par l'ouverture 18.

Un fois que le bouchon 1 est préparé comme représenté sur la figure 2B, l'étape E1 de positionnement est mise en œuvre pour insérer le bouchon 1 dans la cavité 2. Comme représenté sur la figure 2C, le bouchon 1 est inséré de sorte que l'extrémité 11 de la tige 9 soit accessible depuis l'extérieur de la cavité 2 afin de pouvoir tirer ladite tige 9.

Dans le mode de réalisation particulier considéré (de la figure 2A à la figure 2D), la cavité 2 correspond à un conduit traversant (c'est-à-dire qu'elle est ouverte à ses deux extrémités) de section sensiblement rectangulaire. Seules deux parois 26 et 27 de la cavité 2 sont représentées sur la figure 2C et la figure 2D. Dans d'autres modes de réalisation, la cavité 2 peut présenter d'autres configurations, elle peut être borgne, comprendre plusieurs conduits ou encore avoir une section de forme différente et/ou qui varie sur la longueur de la cavité 2 (par exemple une cavité conique).

Le bouchon 1 peut être inséré par l'extrémité de la cavité 2 qui est la plus pratique pour réaliser le tirage de la tige 9. De plus, il peut être positionné où l'on souhaite le long de la cavité 2 tant que sa forme le permet.

A cet effet, le bouchon 1 est configuré avec une forme prévue pour coopérer avec les parois de la cavité 2. Par « coopérer », on entend que la forme générale du bouchon 1 (notamment celle de l'enveloppe 3) correspond approximativement à la forme de la cavité 2, en étant légèrement plus petite que cette dernière. Ainsi, le bouchon 1 peut être inséré à la main dans la cavité 2 en y étant glissé. De préférence, la forme du bouchon 1 est prévue pour qu'il soit ajusté à la cavité 2 en étant au contact des parois 26 et 27. Pour des raisons de clarté, un écart entre la paroi latérale 4 non déformée de l'enveloppe 3 et les parois 26 et 27 de la cavité 2 est volontairement représenté de façon exagérée sur la figure 2C et la figure 2D.

Une fois que le bouchon 1 est mis en position dans la cavité 2, l'étape E2 de déformation est mise en œuvre pour déformer l'enveloppe 3. Pour ce faire, comme représenté par une flèche D sur la figure 2D, la tige 9 est déplacée en étant tirée par l'extrémité 11 depuis l'extérieur de la cavité 2. La tige 9 peut être tirée manuellement ou à l'aide d'un outil de tirage (non représenté) avec un effort de tirage prédéterminé. De préférence, la tige 9 est tirée en prenant appui contre la surface d'appui 21 du couvercle rigide 19 pour éviter que le bouchon 1 se déplace dans la cavité 2 durant l'étape E2.

L'extrémité 11 peut être tirée selon la direction longitudinale de la tige 9. Toutefois, elle peut également être tirée selon une autre direction. Cela peut être le cas, notamment, lorsque la cavité 2 n'est pas droite ou lorsqu' un obstacle est situé directement en face de la cavité 2 obligeant à courber l'extrémité 11 de la tige 9.

Le déplacement de la tige 9 entraîne le déplacement de la tête 12 qui exerce alors un effort de compression sur l'enveloppe 3, représenté par une flèche E sur la figure 2D. Sous l'effet de cet effort de compression, l'enveloppe 3 se déforme et ses parois sont repoussées de part et d'autre de la tête 12 en étant plaquées contre les parois 26 et 27 de la cavité 2. L'effort de tirage prédéterminé est configuré pour déformer suffisamment l'enveloppe 3 de sorte qu'elle bouche toute la cavité 2 ou au moins une majeure partie. Une fois déformée autour de la tête 12, l'enveloppe 3 se maintient en place toute seule dans la cavité 2.

En outre, lors de l'étape E2, la déformation de l'enveloppe 3 et/ou le déplacement de la pièce anti-retour 22 (entraîné par le déplacement de la tige 9) chasse le joint visqueux 17 à l'extérieur de l'enveloppe 3 au travers des orifices 8 comme illustré par deux flèches F sur la figure 2D. Le joint visqueux 17 est alors pressé entre les parois de l'enveloppe 3 et les parois de la cavité 2 ce qui lui permet de se répandre dans tout l'espace restant entre le bouchon 1 et les parois de la cavité 2, notamment dans de petits espaces qui pourraient se former entre l'enveloppe 3 et les parois de la cavité 2 durant l'étape E2.

Une fois que l'enveloppe 3 est déformée de manière à boucher complètement la cavité 2 avec le joint visqueux 17, l'étape E3 de polymérisation est mise en œuvre pour laisser ledit joint visqueux 17 polymériser. La polymérisation du joint visqueux 17 à température ambiante permet de finaliser l'étanchéification de la cavité 2. En particulier, il permet de renforcer la qualité de l'étanchéité et il contribue au maintien en place du bouchon 1 dans la cavité 2.

Ainsi, en choisissant judicieusement la forme du bouchon 1 (et notamment celle de l'enveloppe 3) et son positionnement dans la cavité 2, on est en mesure d'obtenir une excellente étanchéité, et ce, à moindre effort par rapport à un procédé d'étanchéification usuel. En effet, l'installation du bouchon 1 ne nécessite un accès que d'un côté de la cavité et permet donc d'externaliser complètement le processus d'installation. De plus, cette solution d'étanchéité ne nécessite pas de nettoyage après installation et donc réduit la charge de travail associée.

Dans un mode de réalisation particulier, le procédé P comprend une étape E4 intermédiaire, mise en œuvre après l'étape E1 et avant l'étape E2. Cette étape E4 comprend la mise en place d'une pièce intermédiaire 28 dans la cavité 2, comme représenté sur la figure 6. Cette pièce intermédiaire 28 comprend une première extrémité 29 configurée pour venir en appui contre le bouchon 1 et une seconde extrémité 30 configurée pour faire saillie à l'extérieur de la cavité 2. De préférence, l'extrémité 29 de la pièce intermédiaire 28 est mise en appui contre la surface d'appui 21 du couvercle rigide 19. En outre, l'extrémité 30 de la pièce intermédiaire 28 est pourvue d'une surface 31 apte à servir de surface d'appui pour réaliser le tirage de la tige 9.

La pièce intermédiaire 28 ainsi agencée avec la face 31 faisant saillie à l'extérieur de la cavité 2, permet d'obtenir une surface d'appui pour le tirage de la tige 9 qui est facilement accessible. Ceci est particulièrement intéressant dans les configurations où l'accès à la cavité 2 est limité et/ou lorsque l'outil de tirage ne peut pas être introduit jusqu'au bouchon 1 pour prendre appui directement sur la surface d'appui 21 du couvercle rigide 19. La pièce intermédiaire 28 peut, notamment, présenter une forme particulière, par exemple coudée, de sorte que la face 31 fasse saillie à l'extérieur de la cavité 2 avec une orientation adaptée pour réaliser le tirage de la tige 9.

Une application préférée pour le bouchon 1 est représentée de la figure 3 à la figure 6. Elle concerne une zone de jonction entre des structures primaires d'une aile 32 et d'un fuselage 33 d'un aéronef AC (représenté partiellement sur la figure 3). Plus particulièrement, il s'agit d'une zone de jonction entre un caisson de voilure 34 de l'aile 32 et un caisson central 35 du fuselage 33.

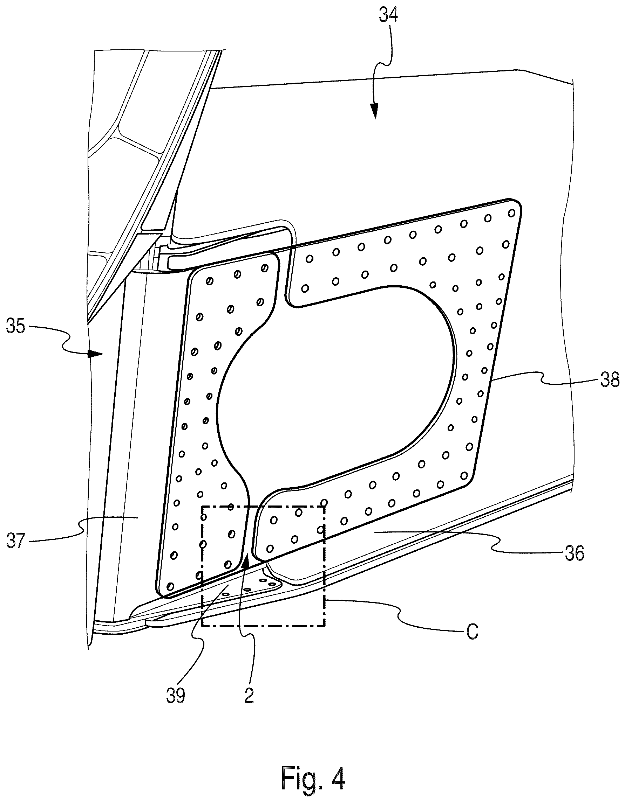

Comme représenté sur la figure 4, l'assemblage du caisson de voilure 34 et du caisson central 35 implique une superposition complexe de plusieurs plaques métalliques ou en matériau composite avec des formes particulières. Dans cet assemblage, une plaque 36 du caisson de voilure 34 vient en regard d'une plaque 37 du caisson central 35. Les contraintes d'assemblage font que les plaques 36 et 37 sont espacées l'une de l'autre créant un espace entre elles. De plus, une plaque 38 est fixée par-dessus les plaques 36 et 37 en recouvrant ledit espace entre elles. La plaque 38 est représentée transparente sur la figure 4 de manière à visualiser l'espace au niveau de l'interface entre les plaques 36 et 37.

L'espace entre les plaques 36 et 37 ainsi recouvert par la plaque 38 forme un conduit (ou une cheminée) de section sensiblement rectangulaire, mis en évidence sur la figure 4 dans un cadre C. Ce conduit ménagé entre les plaques 36, 37 et 38 correspond à la cavité 2 que l'on souhaite boucher à l'aide du bouchon 1.

La zone encadrée par le cadre C est représentée de manière agrandie sur la figure 5 et la figure 6. Comme représenté en détail sur la figure 5, la cavité 2 est délimitée par des faces 40, 41 et 42. Les faces 40 et 41 correspondent à des tranches, respectivement des plaques 36 et 37, agencées en regard l'une de l'autre. La face 42 correspond à une face d'une plaque arrière (sensiblement parallèle à la plaque 38) agencée sur les plaques 36 et 37 depuis l'intérieur du caisson de voilure 34. Une dernière face délimitant la cavité 2 correspond à la face de la plaque 38 agencée sur les plaques 36 et 37 depuis l'extérieur du caisson de voilure 34. Pour des raisons de clarté, la plaque 38 n'est pas représentée sur la figure 5 et la figure 6.

En outre, la cavité 2 présente, à l'une de ses extrémités, une ouverture 43 débouchant vers l'extérieur du caisson de voilure 34 en face d'une cornière 39. A son autre extrémité (non représentée), la cavité 2 débouche à l'intérieur du caisson de voilure 34.

Dans cette application préférée, comme représenté sur la figure 5, le bouchon 1 est positionné dans la cavité 2 à proximité de l'ouverture 43. En effet, un espace entre la cornière 39 et l'ouverture 42 permet d'insérer le bouchon 1, si besoin, en le pliant (grâce à sa structure générale flexible). L'extrémité du bouchon 1 comprenant la tête 12 est agencée vers l'intérieur de la cavité 2 et l'extrémité comprenant l'extrémité 11 à tirer est agencée vers l'ouverture 43. La tige 9 est prévue avec une longueur adaptée pour dépasser à l'extérieur de la cavité 2.

Comme représenté sur la figure 6, la pièce intermédiaire 28 est agencée dans la cavité 2 en appui contre le bouchon 1. Plus précisément, l'extrémité 29 de la pièce intermédiaire 28 est insérée dans la cavité 2 jusqu'à venir en appui contre la surface d'appui 21 du couvercle rigide 19. La pièce intermédiaire 28 présente une longueur adaptée de sorte que son extrémité 30 dépasse à l'extérieur de la cavité 2 lorsque l'extrémité 29 est en appui contre le bouchon 1. En outre, la pièce intermédiaire 28 présente une forme coudée de sorte que la face 31 fasse saillie à l'extérieur de la cavité 2, sensiblement perpendiculairement à cette dernière.

La pièce intermédiaire 28 ainsi positionnée permet d'utiliser facilement l'outil de tirage (non représenté) pour tirer l'extrémité 11 de la tige 9. En effet, la pièce intermédiaire 28 est configurée de sorte que l'extrémité 11 de la tige 9 puisse passer au travers de la pièce intermédiaire 28 de manière à déboucher au niveau de la face 31. L'outil de tirage est alors mis en contact avec la face 31 depuis l'extérieur de la cavité 2 pour tirer l'extrémité 11 qui dépasse, avec un effort prédéterminé qui peut être choisi par un opérateur. Cet effort prédéterminé permet de déformer le bouchon 1 tel que décrit ci-avant de manière à boucher la cavité 2. Une fois la tige 9 tirée et le bouchon 1 déformé, la pièce intermédiaire 28 est retirée et l'extrémité 11 de la tige 9 est coupée.

Le bouchon 1 tel que celui décrit ci-dessus présente de nombreux avantages. En particulier :
- il permet de boucher facilement une cavité 2 de manière étanche puisqu'il peut être inséré facilement dans la cavité 2 et déformé depuis l'extérieur sans générer de problème d'accessibilité ;
- il peut être mis en place rapidement et permet de limiter les étapes de préparation de la cavité 2 ;
- il est peu onéreux et permet de limiter les coûts de main d'œuvre ;
- il peut facilement être adapté pour boucher des cavités de tailles et/ou de formes variées ;
- il peut être mis en place grâce à un outillage peu encombrant puisqu'il ne nécessite pas de pression d'injection importante ;
- il peut être positionné précisément à un endroit souhaité de la cavité 2 ; et
- il permet d'obtenir une excellente étanchéité grâce à la combinaison de l'enveloppe 3 déformable et du joint visqueux 17.

## Revendications

1. Bouchon d'étanchéité destiné à être agencé à l'intérieur d'une cavité (2) pour boucher ladite cavité (2) de manière étanche,
**caractérisé en ce qu'**il comporte au moins :
- une enveloppe (3) configurée pour pouvoir être déformée de manière incompressible, l'enveloppe (3) délimitant un espace interne (7) creux et étant pourvue d'au moins un orifice (8) apte à faire communiquer ledit espace interne (7) avec l'extérieur de l'enveloppe (3) ;
- une tige (9) agencée de manière coulissante au travers de l'enveloppe (3) en s'étendant de part et d'autre de ladite enveloppe (3), la tige (9) comprenant une première extrémité (10) pourvue d'une tête (12) apte à exercer un effort de compression sur l'enveloppe (3) pour la déformer lorsqu'une seconde extrémité (11) de la tige (9) est déplacée de manière à tirer la tête (12) contre l'enveloppe (3) ;
**caractérisé en ce que** ledit bouchon d'étanchéité comprend :
- un joint visqueux (17) agencé dans l'espace interne (7) de l'enveloppe (3), le bouchon d'étanchéité (1) étant configuré de sorte que le joint visqueux (17) soit chassé, au moins en partie, à l'extérieur de l'enveloppe (3) au travers du ou des orifices (8) lorsque l'enveloppe (3) est déformée par la tête (12) de la tige (9).

2. Bouchon d'étanchéité selon la revendication 1,
**caractérisé en ce que** la tête (12) de la tige (9) présente une forme trapézoïdale, la tête (12) étant agencée de sorte que la petite base de la forme trapézoïdale vienne en appui contre l'enveloppe (3) lorsque la seconde extrémité (11) de la tige (9) est déplacée de manière à tirer la tête (12) contre ladite enveloppe (3).

3. Bouchon d'étanchéité selon l'une quelconque des revendications 1 et 2, **caractérisé en ce que** l'enveloppe (3) est pourvue d'une ouverture (18) permettant d'accéder à l'espace interne (7) et **en ce que** le bouchon d'étanchéité (1) comporte un couvercle rigide (19) configuré pour fermer ladite ouverture (18).

4. Bouchon d'étanchéité selon l'une quelconque des revendications 1 à 3, **caractérisé en ce qu'**il comporte une pièce anti-retour (22) agencée sur la tige (9), dans l'espace interne (7) de l'enveloppe (3) en s'étendant transversalement par rapport à la tige (9), la pièce anti-retour (22) étant configurée pour guider le joint visqueux (17) vers le ou les orifices (8) de l'enveloppe (3) lorsque ladite enveloppe (3) est déformée, et pour empêcher le joint visqueux (17) de refouler vers l'intérieur de l'espace interne (7).

5. Bouchon d'étanchéité selon l'une quelconque des revendications 1 à 4, **caractérisé en ce que** le joint visqueux (17) correspond à un mastic d'étanchéité polymérisable à température ambiante.

6. Bouchon d'étanchéité selon l'une quelconque des revendications 1 à 5, **caractérisé en ce que** l'enveloppe (3) présente une forme parallélépipédique allongée comprenant une paroi latérale (4) dans laquelle sont pratiqués le ou les orifices (8), et comprenant une paroi (5, 6) à chacune de ses extrémités longitudinales entre lesquelles s'étend la tige (9) de manière traversante, la tête (12) de la tige (9) étant apte à venir en appui contre l'une desdites parois (5, 6) pour déformer l'enveloppe (3).

7. Structure pourvue d'au moins une cavité (2),
**caractérisée en ce qu'**elle comporte au moins un bouchon d'étanchéité (1) selon l'une quelconque des revendications 1 à 6, le bouchon d'étanchéité (1) étant agencé dans la cavité (2) de manière à boucher ladite cavité (2) de façon étanche.

8. Procédé pour boucher une cavité à l'aide d'un bouchon d'étanchéité selon l'une quelconque des revendications 1 à 6,
**caractérisé en ce qu'**il comporte au moins les étapes suivantes mises en œuvre de manière successive :
- une étape (E1) de positionnement pour insérer le bouchon d'étanchéité (1) dans la cavité (2) à boucher de sorte que la seconde extrémité (11) de la tige (9) soit accessible depuis l'extérieur de la cavité (2) ;
- une étape (E2) de déformation pour déplacer la seconde extrémité (11) de la tige (9) de manière à tirer la tête (12) contre l'enveloppe (3) et exercer un effort de compression pour déformer ladite enveloppe (3) jusqu'à ce que l'enveloppe (3) bouche, au moins en partie, la cavité (2) et qu'au moins une partie du joint visqueux (17) soit chassé à l'extérieur de l'enveloppe (3) au travers du ou des orifices (8) ; et
- une étape (E3) de polymérisation pour laisser le joint visqueux (17), chassé à l'extérieur de l'enveloppe (3) à l'étape (E2) de déformation, polymériser de manière à obtenir l'étanchéité complète de la cavité (2).

9. Procédé selon la revendication 8,
**caractérisé en ce qu'**il comporte une étape (E0) préliminaire, mise en œuvre avant l'étape (E1) de positionnement, pour injecter le joint visqueux (17) dans l'espace interne (7) de l'enveloppe (3).

10. Procédé selon l'une des revendications 8 et 9,
**caractérisé en ce qu'**à l'étape (E2) de déformation, la seconde extrémité (11) de la tige (9) est déplacée en étant tirée à l'aide d'un outil de tirage apte à fournir un effort de tirage prédéterminé.

11. Procédé selon l'un quelconque des revendications 8 à 10,
**caractérisé en ce qu'**il comprend une étape (E4) intermédiaire, mise en œuvre après l'étape (E1) de positionnement et avant l'étape (E2) de déformation, pour mettre en place dans la cavité (2) au moins une pièce intermédiaire (28) de sorte qu'une première extrémité (29) de la pièce intermédiaire (28) soit mise en appui contre le bouchon d'étanchéité (1) à l'intérieur de la cavité (2) et qu'une seconde extrémité (30) de la pièce intermédiaire (28) fasse saillie à l'extérieur de ladite cavité (2), le tirage de la seconde extrémité (11) de la tige (9) étant réalisée en prenant appui contre la seconde extrémité (30) de la pièce intermédiaire (28).

## Patentansprüche

1. Dichtungsstopfen, der dazu vorgesehen ist, in der Innenseite eines Hohlraums (2) zum Abdichten des Hohlraums (2) auf dichte Weise angeordnet zu werden,
**dadurch gekennzeichnet, dass** er mindestens umfasst:
eine Hülle (3), die dazu ausgelegt ist, auf inkompressible Weise verformt werden zu können, wobei die Hülle (3) einen hohlen Innenraum (7) abgrenzt und mit mindestens einer Aussparung (8) versehen ist, die geeignet ist, den Innenraum (7) mit der Außenseite der Hülle (3) in Verbindung zu setzen;
- einen Schaft (9), der auf gleitende Weise durch die Hülle (3) hindurch angeordnet ist, indem er sich beidseitig der Hülle (3) erstreckt, wobei der Schaft (9) ein erstes Ende (10) umfasst, das mit einem Kopf (12) versehen ist, der geeignet ist, eine Kompressionskraft auf die Hülle (3) auszuüben, um sie zu verformen, wenn ein zweites Ende (11) des Schafts (9) so verschoben wird, dass der Kopf (12) gegen die Hülle (3) gezogen wird;
**dadurch gekennzeichnet, dass** der Dichtungsstopfen umfasst:
- eine dickflüssige Dichtung (17), die im Innenraum (7) der Hülle (3) angeordnet ist, wobei der Dichtungsstopfen (1) derart ausgelegt ist, dass die dickflüssige Dichtung (17) zumindest teilweise durch die Aussparung(en) (8) hindurch zur Außenseite der Hülle (3) verdrängt wird, wenn die Hülle (3) durch den Kopf (12) des Schafts (9) verformt wird.

2. Dichtungsstopfen nach Anspruch 1,
**dadurch gekennzeichnet, dass** der Kopf (12) des Schafts (9) eine trapezförmige Form aufweist, wobei der Kopf (12) derart angeordnet ist, dass die kleine Basis der trapezförmigen Form an der Hülle (3) anliegt, wenn das zweite Ende (11) des Schafts (9) so verschoben wird, dass der Kopf (12) gegen die Hülle (3) zieht.

3. Dichtungsstopfen nach einem der Ansprüche 1 und 2,
**dadurch gekennzeichnet, dass** die Hülle (3) mit einer Öffnung (18) versehen ist, die ermöglicht, auf den Innenraum (7) zuzugreifen, und dadurch, dass der Dichtungsstopfen (1) einen steifen Deckel (19) umfasst, der ausgelegt ist, um die Öffnung (18) zu verschließen.

4. Dichtungsstopfen nach einem der Ansprüche 1 bis 3,
**dadurch gekennzeichnet, dass** er ein Rückschlagteil (22) umfasst, das auf dem Schaft (9) im Innenraum (7) der Hülle (3) angeordnet ist, indem es sich in Bezug auf den Schaft (9) querverlaufend erstreckt, wobei das Rückschlagteil (22) ausgelegt ist, um die dickflüssige Dichtung (17) zu der oder den Aussparung(en) (8) der Hülle (3) zu führen, wenn die Hülle (3) verformt ist, und zu verhindern, dass die dickflüssige Dichtung (17) zur Innenseite des Innenraums (7) zurückgedrängt wird.

5. Dichtungsstopfen nach einem der Ansprüche 1 bis 4,
**dadurch gekennzeichnet, dass** die dickflüssige Dichtung (17) einer Dichtungsspachtelmasse entspricht, die bei Umgebungstemperatur polymerisierbar ist.

6. Dichtungsstopfen nach einem der Ansprüche 1 bis 5,
**dadurch gekennzeichnet, dass** die Hülle (3) eine längliche quaderförmige Form aufweist, die eine Seitenwand (4) umfasst, in der die Aussparung(en) (8) ausgebildet sind, und eine Wand (5, 6) an jeder ihrer Längsenden umfasst, zwischen denen sich der Schaft (9) auf querverlaufende Weise erstreckt, wobei der Kopf (12) des Schafts (9) geeignet ist, an einer der Wände (5, 6) anzuliegen, um die Hülle (3) zu verformen.

7. Struktur, die mit mindestens einem Hohlraum (2) versehen ist,
**dadurch gekennzeichnet, dass** sie mindestens einen Dichtungsstopfen (1) nach einem der Ansprüche 1 bis 6 umfasst, wobei der Dichtungsstopfen (1) derart im Hohlraum (2) angeordnet ist, dass der Hohlraum (2) auf dichte Weise abgedichtet wird.

8. Verfahren zum Abdichten eines Hohlraums mithilfe eines Dichtungsstopfens nach einem der Ansprüche 1 bis 6,
**dadurch gekennzeichnet, dass** es mindestens die folgenden Schritte umfasst, die auf sukzessive Weise durchgeführt werden:
- einen Schritt (E1) der Positionierung, um den Dichtungsstopfen (1) in den abzudichtenden Hohlraum (2) derart einzuführen, dass das zweite Ende (11) des Schafts (9) von der Außenseite des Hohlraums (2) aus zugänglich ist;
einen Schritt (E2) der Verformung, um das zweite Ende (11) des Schafts (9) derart zu verschieben, dass der Kopf (12) gegen die Hülle (3) gezogen wird und eine Kompressionskraft zum Verformen der Hülle (3) ausgeübt wird, bis die Hülle (3) den Hohlraum (2) zumindest teilweise abdichtet und dass mindestens ein Teil der dickflüssigen Dichtung (17) zur Außenseite der Hülle (3) durch die Aussparung(en) (8) hindurch verdrängt wird; und
einen Schritt (E3) der Polymerisierung, um die im Schritt (E2) der Verformung zur Außenseite der Hülle (3) verdrängte dickflüssige Dichtung (17) derart zu polymerisieren, dass eine vollständige Abdichtung des Hohlraums (2) erreicht wird.

9. Verfahren nach Anspruch 8,
**dadurch gekennzeichnet, dass** es einen vorläufigen Schritt (E0) umfasst, der vor dem Schritt (E1) der Positionierung durchgeführt wird, um die dickflüssige Dichtung (17) in den Innenraum (7) der Hülle (3) einzuspritzen.

10. Verfahren nach einem der Ansprüche 8 und 9,
**dadurch gekennzeichnet, dass** im Schritt (E2) der Verformung das zweite Ende (11) des Schafts (9) verschoben wird, indem es mithilfe eines Ziehwerkzeugs gezogen wird, das geeignet ist, eine vorbestimmte Zugkraft bereitzustellen.

11. Verfahren nach einem der Ansprüche 8 bis 10,
**dadurch gekennzeichnet, dass** es einen Zwischenschritt (E4) umfasst, der nach dem Schritt (E1) der Positionierung und vor dem Schritt (E2) der Verformung durchgeführt wird, um im Hohlraum (2) mindestens ein Zwischenstück (28) derart einzusetzen, dass ein erstes Ende (29) des Zwischenstücks (28) am Dichtungsstopfen (1) in der Innenseite des Hohlraums (2) anliegt und ein zweites Ende (30) des Zwischenstücks (28) an der Außenseite des Hohlraums (2) hervorsteht, wobei der Zug des zweiten Endes (11) des Schafts (9) durch Anliegen am zweiten Ende (30) des Zwischenstücks (28) vorgenommen wird.

## Claims

1. A sealing plug intended to be arranged inside a cavity in order to plug said cavity leak tightly,
**characterised in that** it comprises at least:
- an envelope configured to be able to be deformed incompressibly, the envelope delimiting a hollow internal space and being provided with at least one orifice capable of making said internal space communicate with the outside of the envelope;
- a rod which can slide through the envelope and extends on either side of said envelope, the rod comprising a first end provided with a head able to exert a compressive force on the envelope in order to deform it when a second end of the rod is moved so as to pull the head against the envelope;
- a viscous seal arranged in the internal space of the envelope, the sealing plug being configured such that the viscous seal is, at least partially, expelled from the envelope through the one or more orifices when the envelope is deformed by the head of the rod.

2. The sealing plug as claimed in claim 1,
**characterised in that** the head of the rod has a trapezoidal shape, the head being arranged such that the small base of the trapezoidal shape comes into contact with the envelope when the second end of the rod is moved so as to pull the head against said envelope.

3. The sealing plug as claimed in either one of claims 1 and 2,
**characterised in that** the envelope is provided with an opening for accessing the internal space and wherein the sealing plug comprises a rigid cover configured to close said opening.

4. The sealing plug as claimed in any one of claims 1 to 3,
**characterised in that** it comprises a non-return part arranged on the rod, in the internal space of the envelope and extending transversely with respect to the rod, the non-return part being configured to guide the viscous seal toward the one or more orifices in the envelope when said envelope is deformed, and to prevent the viscous seal from backing up into the internal space.

5. The sealing plug as claimed in any one of claims 1 to 4,
**characterised in that** the viscous seal corresponds to a sealant mastic which is polymerizable at ambient temperature.

6. The sealing plug as claimed in any one of claims 1 to 5,
**characterised in that** the envelope has an elongate parallelepipedal shape comprising a lateral wall in which the one or more orifices are made, and comprising a wall at each of its longitudinal ends between which the rod extends and through which it passes, the head of the rod being capable of coming into contact with one of said walls so as to deform the envelope.

7. A structure provided with at least one cavity,
**characterised in that** it comprises at least one sealing plug as claimed in any one of claims 1 to 6, the sealing plug being arranged in the cavity so as to plug said cavity leak tightly.

8. A process for plugging a cavity using a sealing plug as claimed in any one of claims 1 to 6,
**characterised in that** it comprises at least the following steps implemented in succession:
- a positioning step for inserting the sealing plug into the cavity to be plugged such that the second end of the rod is accessible from outside the cavity;
- a deformation step for moving the second end of the rod so as to pull the head against the envelope and exert a compressive force to deform said envelope until the envelope at least partially plugs the cavity and at least some of the viscous seal is expelled from the envelope through the one or more orifices; and
- a polymerization step for allowing the viscous seal expelled from the envelope during the deformation step to polymerize so as to obtain complete leak tightness of the cavity.

9. The process as claimed in claim 8,
**characterised in that** it comprises a preliminary step, implemented before the positioning step, for injecting the viscous seal into the internal space of the envelope.

10. The process as claimed in either of claims 8 and 9,
**characterised in that**, during the deformation step, the second end of the rod is moved by being pulled using a pulling tool capable of supplying a predefined pulling force.

11. The process as claimed in any one of claims 8 to 10,
**characterised in that** it comprises an intermediate step, implemented after the positioning step and before the deformation step, for placing at least one intermediate part in the cavity such that a first end of the intermediate part makes contact with the sealing plug inside the cavity and such that a second end of the intermediate part protrudes out of said cavity, the second end of the rod being pulled by making contact with the second end of the intermediate part.
